# EUROPEAN PATENT SPECIFICATION

(11) **EP 4 549 317 B1**
(45) Date of publication and mention of the grant of the patent: **30.09.2026**
(21) Application number: 23207545.7
(22) Date of filing: 02.11.2023
(51) Int. Cl.: B64D 11/02, B64D 11/06

(54) **PASSENGER COMPARTMENT FOR A CABIN OF AN AIRCRAFT**
FAHRGASTRAUM FÜR EINE KABINE EINES FLUGZEUGS
HABITACLE POUR UNE CABINE D'UN AÉRONEF

(43) Date of publication of application: 07.05.2025
(73) Proprietor: B/E Aerospace, Inc., Winston Salem, NC 27105 (US)
(72) Inventor: DELA CRUZ, Maria Anicia Bautista, Tanauan (PH); FERNANDEZ, Dean Rabin Buenavista, Tanauan (PH); RUBIO, Leslie May Balce, Tanauan (PH); MONTANEZ, Christopher Batalla, Tanauan (PH); PORLEY, Leogel Kenzrae Jude Casapao, Tanauan (PH); RECINTO, Margareth Rose Tenorio, Tanauan (PH); ESPIRITU, Jose Federico Soriano, Tanauan (PH); TUICO, Roderico, Tanauan (PH); VALIDO, Kyla Angela Padua, Tanauan (PH); DIMACULANGAN, John Erwell Lasin, Tanauan (PH)
(74) Representative: Dehns

(56) References cited:
- EP-A1- 4 074 599
- WO-A1-2023/187961
- WO-A2-2004/076279
- JP-A- H05 155 390
- US-A1- 2005 103 935
- US-A1- 2021 214 087

## Description

The present disclosure relates generally to a passenger compartment in a cabin of an aircraft, and in particular to a passenger compartment for a passenger with a baby.

### BACKGROUND

Air travel for a passenger with a baby can be a challenging experience, and existing aircraft interiors are not very well suited to caring for a baby, especially during long flights. An aircraft cabin can be noisy and bright, and the presence of lots of people may be over-stimulating for a baby trying to sleep. A crying baby may also disturb surrounding passengers, and existing toilet compartments are not well suited for changing a baby.

The applicants have recognised that there is a need to provide an improved space for a passenger with a baby which allows the passenger to more effectively care for the baby, whilst minimising disturbance to surrounding passengers and being mindful that an aircraft cabin has space limitations.

US 2005/0103935 A1 discloses a passenger compartment having the features of the preamble of claim 1. WO 2023/187961 A1, US 2021/214087 A1, JP H05 155390 A and WO 2004/076279 A2 disclose passenger compartments with baby beds.

### SUMMARY

According to a first aspect, there is provided a passenger compartment for an interior of an aircraft. The passenger compartment is adapted for a passenger with a baby. The compartment comprises a first side wall, a second side wall, a back wall joining the first side wall to the second side wall, a front wall opposite the back wall, the front wall comprising a door to allow the passenger to enter and exit the compartment, a seat, wherein at least a portion of the seat is pivotally attached to the first side wall, a changing table for changing a baby, the changing table pivotally attached to the back wall, and a bassinet attached to the second side wall. A maximum distance between the first side wall and the second side wall is less than 160cm.

The bassinet is rigidly attached to the second side wall. This means that the bassinet is not movable (e.g. rotatable) relative to the second side wall. This allows for a bassinet with raised sides so that the baby can be safely placed in the bassinet during flight.

The bassinet is provided on a portion of the second side wall adjacent the back wall. This helps to maximise space within the compartment.

The bassinet is provided in a space provided between the changing table and the second side wall. This avoids space wastage within the compartment, because it stops the bassinet from taking up more space along the second side wall than necessary, this resulting in a particularly compact compartment.

The passenger compartment according to the above arrangement provides a single self-contained module which can be placed into the interior of an aircraft and which contains features to aid a passenger in caring for a baby. This arrangement of feature results in a particularly compact arrangement of features. In particular, the arrangement of features is designed and arranged to fit within a compartment having a maximum distance between the first side wall and second side wall which is only slightly larger than a conventional toilet compartment for an interior of an aircraft. This is particularly advantageous in the context of an aircraft interior, where available space is limited. The foldable seat and foldable changing table provide the passenger with flexibility in terms of how they can use the space provided by the compartment. For example, the seat and changing table can be folded away to allow a passenger to hold a baby while standing in the compartment. The particular arrangement of features relative to each other has been found to be especially advantageous in terms of providing an improved space for a passenger with a baby which allows the passenger to more effectively care for the baby, whilst being mindful of space limitations. For instance, it has been found to be particularly advantageous to place the changing table on the back wall since the back wall may often be curved or otherwise configured based on the aircraft cabin geometry. The inventors have recognised in this respect that a changing table can advantageously be placed on the back wall and still be folded away, whereas the back wall may have certain shape or size constraints that mean that a seat, for example, could not easily be positioned on the back wall. Accordingly, the inventors further recognise that the seat should advantageously be placed on one of the side walls. The placement of the bassinet on the other (second) side wall allows the passenger to watch the baby in the bassinet whilst using the seat. Further, placing these components on different walls may provide a more efficient use of the available space.

In a further embodiment of any of the above, the passenger compartment further comprises a screen for in-flight entertainment, wherein the screen is attached to the second side wall. This allows the screen to be opposite the seat so that the screen can be easily seen by the passenger when sat in the seat.

In a further embodiment of the above, the screen is attached to a portion of the second side wall adjacent to the front wall. This helps to contribute to the compactness of the passenger compartment.

In a further embodiment of any of the above, at least one of the first side wall, the second side wall, the back wall and the front wall comprises an acoustic liner for acoustically insulating the compartment. The acoustic liner reduces the transmission of noise into and out of the compartment. This is particularly important in the context of an aircraft interior because it allows the compartment to be quieter and more comfortable for a baby and passenger, and reduces noise transmitted from inside of the compartment to provide comfort for passengers around the compartment.

In a further embodiment of the above, all of the first side wall, the second side wall, the back wall and the front wall comprise an acoustic liner.

In a further embodiment of any of the above, the maximum distance between the first side wall and the second side wall is less than 130cm. This results in an even more compact compartment. The first side wall and the second side wall in embodiments are parallel to each other.

In a further embodiment of any of the above, a maximum distance between the back wall and the front wall is less than 180cm. The arrangement of features allows for a relatively small distance between the front and back wall. As mentioned above, this is particularly advantageous in the context of an aircraft interior, where space is limited. For instance, the distance between the back wall and the front wall may be dictated by the aircraft cabin layout, e.g. the aisle width. Thus, the distance between the back wall and the front wall may be essentially standardised (for a particular class of aircraft). In a further embodiment of the above, a maximum distance between the back wall and the front wall is less than 160cm. This results in an even more compact compartment.

In a further embodiment of any of the above, the seat is attached to a portion of the first side wall adjacent to the front wall. The user can enter the compartment when the seat is folded up, and the seat can then be folded down when the passenger wishes to sit in the seat. This is a particularly compact arrangement and avoids space wastage adjacent to the front wall.

In a further embodiment of any of the above, the changing table is attached to a portion of the back wall adjacent the first side wall. This also helps to maximise space within the compartment and to provide a particularly compact arrangement.

In a further embodiment of any of the above, a space is provided between the seat and the back wall, and the changing table extends across the space between the seat and the back wall when in a deployed position. This allows for a compact arrangement of these features so that a or the distance between the back and front wall is minimised.

In a further embodiment of any of the above, the passenger compartment further comprises a module comprising a waste bin and a tissue dispenser provided on the second side wall. These features aid the passenger in caring for a baby.

The passenger compartment is designed for use within an aircraft. For example, the passenger compartment may be installed within an aircraft cabin. According to a further aspect, there is provided an aircraft interior layout including one or more rows of passenger seats and the passenger compartment of any of the above. The passenger compartment may generally be installed at any suitable and desired position relative to the passenger seats but may typically be installed towards a rear or front portion of the aircraft cabin, e.g. in a similar manner and location to a toilet compartment.

### BRIEF DESCRIPTION OF THE DRAWINGS

Various embodiments will now be described, by way of example only, and with reference to the accompanying drawings in which:
Figure 1 shows a perspective diagonal view of an exterior of a passenger compartment for a passenger with a baby;
Figure 2 shows another perspective diagonal view of the exterior of the passenger compartment of Figure 1;
Figure 3 illustrates a diagonal view of the compartment of Figures 1 and 2, with a first side wall and front wall of the compartment omitted to show the interior of the compartment;
Figure 4 illustrates the compartment shown in Figures 1 to 3, with a changing table and seat of the compartment shown in a folded position;
Figure 5 illustrates a perspective view of the compartment shown in Figures 1 to 4, with the front wall omitted to illustrate the interior of the compartment;
Figure 6 illustrates a perspective view of the compartment shown in Figures 1 to 5, with the back wall omitted to illustrate the interior of the compartment;
Figure 7 shows another perspective view of the compartment shown in Figures 1 to 6, with the back wall omitted to illustrate the interior of the compartment;
Figure 8 illustrates an embodiment of an acoustic liner suitable for use in the compartment shown in Figures 1 to 7; and
Figure 9 illustrates a schematic cross-sectional top view of an embodiment of an aircraft interior 50 including a passenger compartment according to an embodiment.

### DETAILED DESCRIPTION

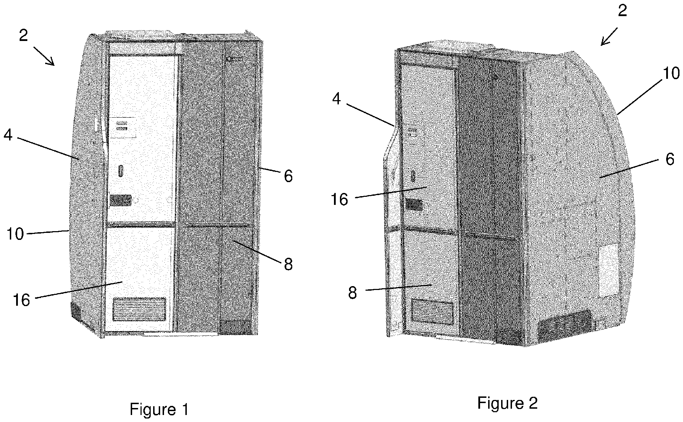

Figures 1 and 2 illustrate a passenger compartment 2 for an interior of a passenger aircraft. Figure 1 illustrates a perspective diagonal view of an exterior of the passenger compartment 2, and Figure 2 illustrates another perspective diagonal view of an exterior of the passenger compartment 2 (which will be referred to herein as a 'compartment'). The compartment 2 provides a dedicated space for a passenger to care for a baby.

The illustrated compartment 2 comprises a first side wall 4, a second side wall 6, a front wall 8, a back wall 10, and a top wall 14. The compartment 2 thus provides a fully enclosed space for the passenger and baby. The compartment 2 comprises a door 16 attached to the front wall 8. In this embodiment, the first side wall 4 and the second side wall 6 are flat and parallel to each other. A cross-section of the illustrated compartment 2, the cross-section taken horizontally, is generally rectangular. As shown in Figure 2, however, the back wall 10 has a curved profile. This allows the compartment 2 to fit snugly against a curved internal wall of the fuselage of the aircraft, in order to maximise space within the compartment 2. The walls of the compartment 2 include an acoustic liner for reducing the transmission of noise into and out of the compartment 2. This may be particularly important in this context because it allows the compartment 2 to be quieter and more comfortable for a baby and passenger, and reduces noise transmitted from inside of the compartment 2 to provide comfort for passengers around the compartment 2. The illustrated compartment 2 provides a single self-contained module which can be placed into the interior of an aircraft.

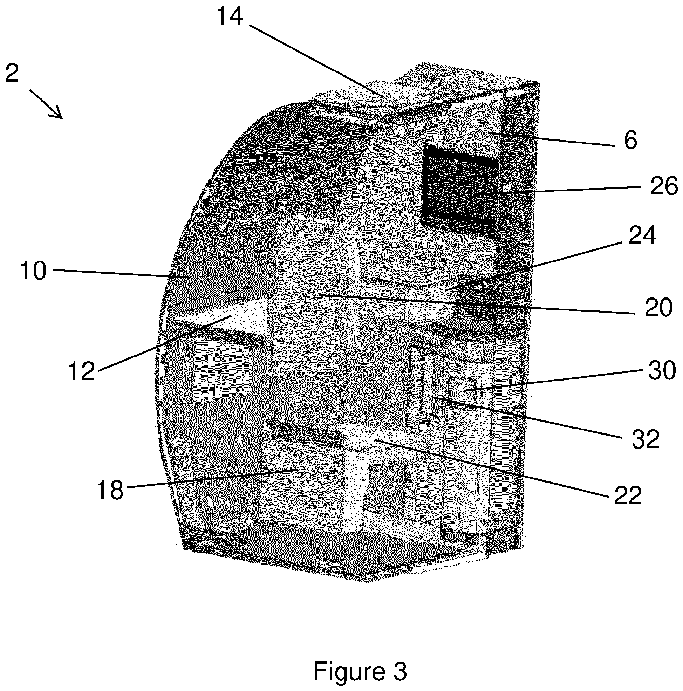

Figure 3 illustrates a diagonal view of the compartment 2 of Figures 1 and 2, with the first side wall 4 and front wall 8 omitted to show the interior of the compartment 2. The compartment 2 provides a baby changing table 12, which is pivotally attached to the inside of the back wall 10 and can be manually pivoted between a deployed and folded position.

The compartment 2 also provides a foldable seat 18 for the passenger to sit on. The foldable seat 18 is provided on the first side wall 4 and comprises a back 20 and a bottom 22. The back 20 of the seat 18 is rigidly attached to the first side wall 4 and provides support for the passenger's back. The bottom 22 of the seat 18 is pivotally attached to the first side wall 4 and can be rotated between a deployed and folded position, as explained in more detail below.

As shown in Figure 3, the compartment 2 also provides a bassinet 24. The bassinet 24 is rigidly attached to the inside of the second side wall 6 and provides a safe space for a baby to sleep.

The compartment 2 also comprises an in-flight entertainment screen 26 attached to a portion of the second side wall 6 opposite the seat 18 and generally at the eye level of the passenger when sat in the seat 18. A remote control 28 for controlling the in-flight entertainment is also provided and is attached to the second side wall 6. The apparatus can also include an electrical headphone inlet to allow a passenger to hear the in-flight entertainment, and charging inlets for charging the passenger's personal electronic devices (for example, a mobile phone). The second side wall 6 also provides a waste bin 30 and a tissue dispenser 32 to assist the passenger in caring for the baby. The waste bin 30 and tissue dispenser 32 in this embodiment is provided on a portion of the second side wall 6 below the screen 26. The compartment 2 may also comprise, for example, an intercom and emergency button to ensure the safety of the passenger and baby.

As shown in Figure 3, the seat 18 is attached to a portion of the first side wall 4 adjacent to the front wall 8. The screen 26 is attached to a portion of the second side wall 6 adjacent to the front wall 8 so that the screen 26 is opposite the seat 18. The bassinet 24 is provided on a portion of the second side wall 6 adjacent the back wall 10. The changing table 12 is attached to a portion of the back wall 10 adjacent the first side wall 4. The bassinet 24 is provided in a space provided between the changing table 12 and the second side wall 6. A space is also provided between the seat 18 and the back wall 10, and the changing table 12 extends across this space when in the deployed position. This specific arrangement of features allows the components for caring for a baby to be fit into a more compact space, whilst providing the passenger with space necessary for caring for a baby. For example, the arrangement of features may be designed and arranged to fit within a compartment 2 having a maximum distance between the first side wall 4 and second side wall 6 of less than 160 cm, for example less than 140 cm, or more preferably less than 120 cm such that the compartment 2 has a footprint similar to a standard toilet compartment (or slightly larger). The arrangement of features may also be designed and arranged to fit within a compartment 2 having a maximum distance between the back wall 10 and front wall 8 of less than 180 cm, for example less than 160 cm, or more preferably less than 140 cm. The foldable seat 18 and foldable changing table 12 provide the passenger with flexibility in terms of how they can use the space provided by the compartment 2. For example, the seat 18 and changing table 12 can be folded away to allow a passenger to hold a baby while standing in the compartment 2.

Figure 3 illustrates the changing table 12 in a deployed position. In this position the changing table 12 has been manually rotated from its stowed position to a deployed position in which the table surface of the changing table 12 is generally horizontal to allow a baby to be changed on the changing table 12. The foldable seat 18 is also shown in a deployed position. In this position the bottom 22 of the seat 18 has been unfolded and is ready for a passenger to sit on it. As shown, the changing table 12 and foldable seat 18 are designed and arranged so that there is no overlap between the changing table 12 and the foldable seat 18 when both of these components are in deployed positions. This allows these two components to be deployed at the same time.

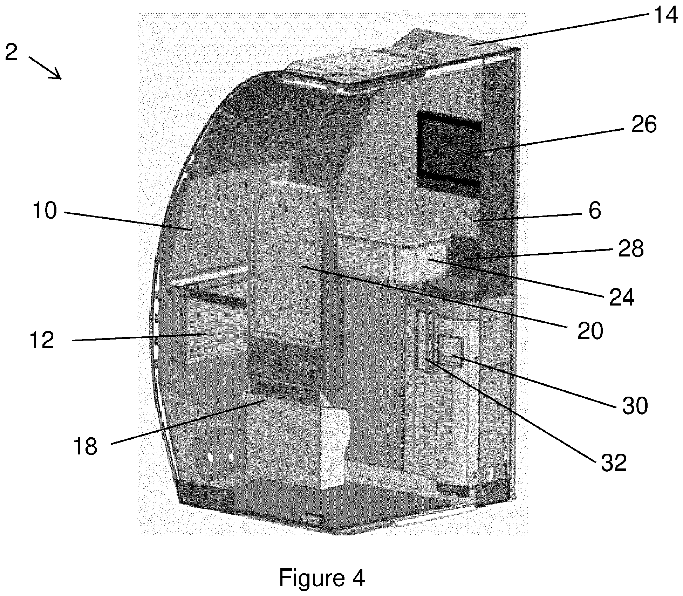

Figure 4 illustrates the same compartment 2 as that shown in Figure 3, but with the changing table 12 and the seat 18 both in a folded position. As shown, the changing table 12 has been folded down so that it sits against the back wall 10. Similarly, the bottom 22 of the seat 18 has been folded to a folded position where the seat bottom 22 is held against the first side wall 4. The door 16 of the compartment 2 is provided on a portion of the front wall 8 adjacent to the first side wall 4, and the passenger has space to enter the compartment 2 when the seat 18 is in the folded position. The passenger can then manually rotate the seat 18 to the deployed position if desired when they are in the compartment 2.

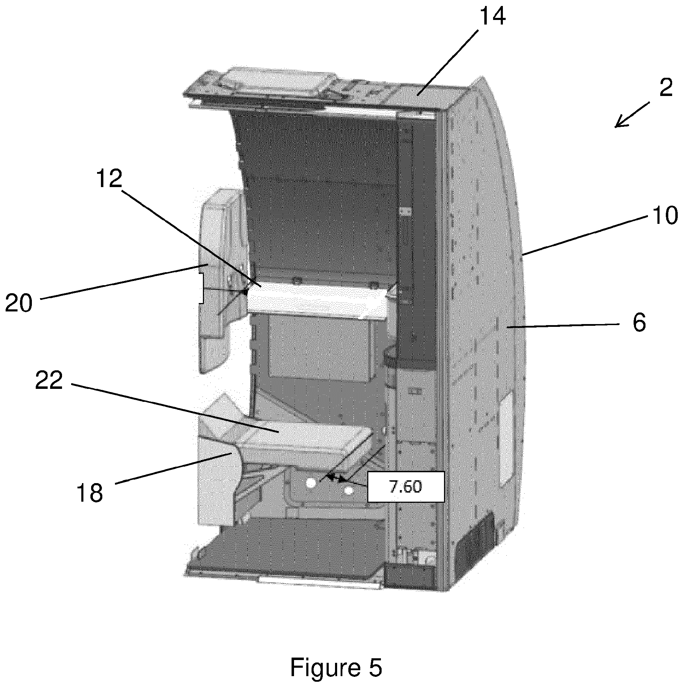

Figure 5 illustrates a perspective view of the compartment 2 shown in Figures 1 to 4 with the front wall 8 omitted to illustrate the interior of the compartment 2. As shown, the bottom 22 of the seat 18 comprises at least one bracket to hold the seat 18 in the deployed position. The bracket can be rotated out from under the bottom 22 of the seat 18 to allow the seat bottom 22 to be rotated to a folded position. As shown, the changing table 12 extends from the first side wall 4 to the bassinet 24 in order to maximise space. When in a deployed position, the bottom 22 of the seat 18 extends from the first side wall 4 towards the second side wall 6. A gap is provided between the end of the bottom 22 of the seat 18 and the second side wall 6 to allow space for the passenger's legs.

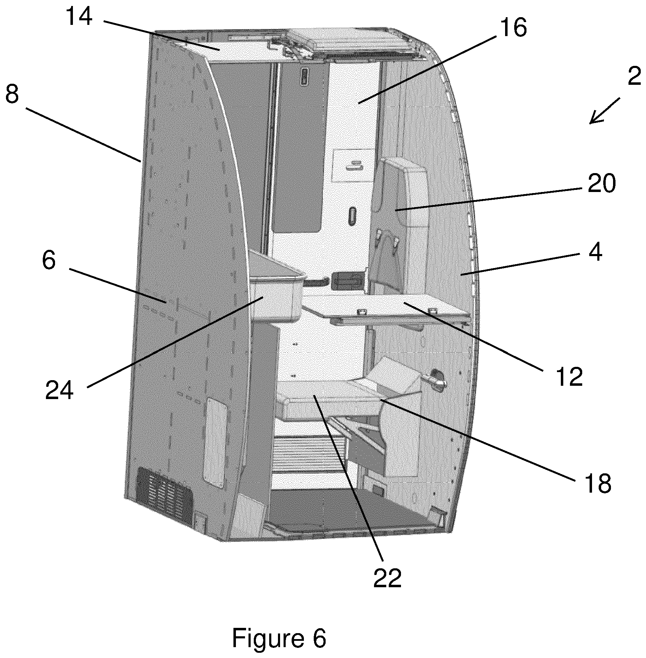

Figure 6 illustrates a perspective view of the compartment 2 with the back wall 10 omitted to illustrate the interior of the compartment 2. As shown, when the changing table 12 is in a deployed position, the changing table 12 protrudes from the back wall 10 towards the seat 18 such that the changing table 12 ends adjacent to the seat 18.

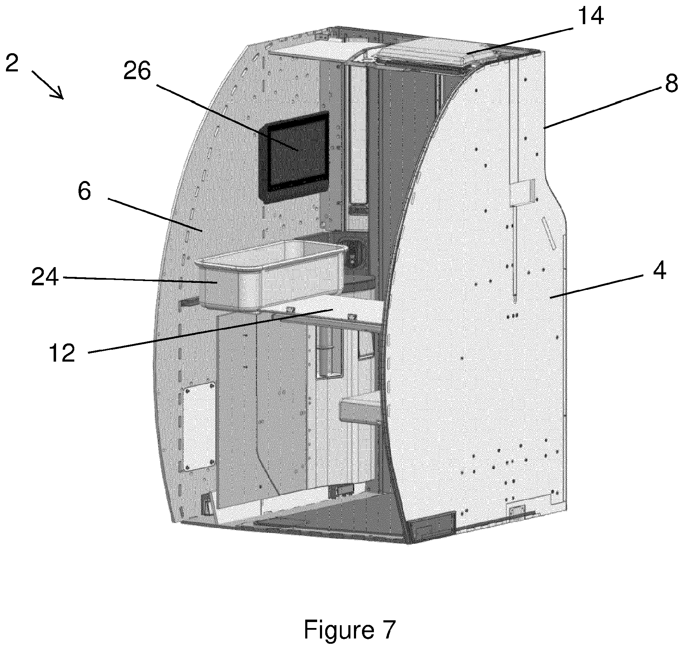

Figure 7 shows another perspective view of the compartment 2 with the back wall 10 omitted. As shown, the screen 26 is located above and partially overlaps the bassinet 24 on the second side wall 6. This again has been found to be a particularly compact arrangement of these features. The placement of the bassinet 24 on the second side wall 6 and below the screen 26 allows the passenger to watch the baby in the bassinet 24 whilst enjoying the in-flight entertainment. Figure 7 also illustrates a light for the compartment 2. The light is located on the inside of the front wall 8 adjacent to the second side wall 6. The light is elongate and extends vertically along part of the front wall 8. The light is dimmable and provides soft lighting to improve the experience for the passenger and baby.

Although in the described embodiment the first side wall 4 is provided on the left of the compartment 2 (the left defined relative to a view facing the front wall 8), the teachings would equally apply to an arrangement with the first side wall 4 and second side wall 6 flipped so that the first side wall 4 is provided on the right of the compartment 2.

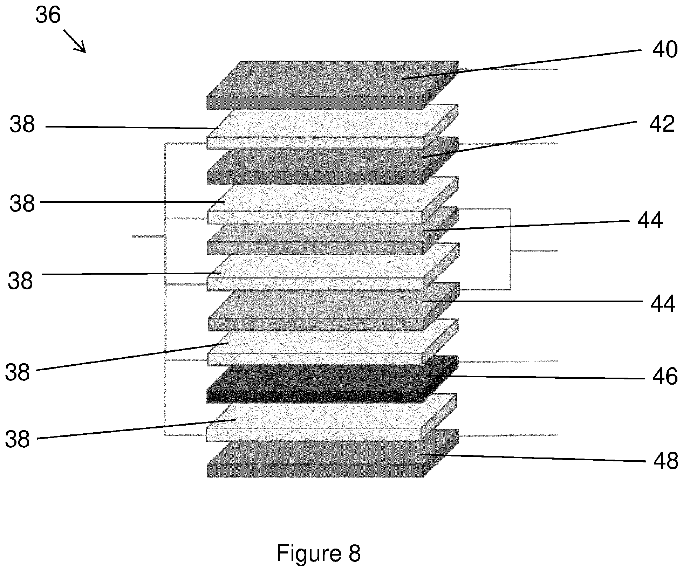

Figure 8 illustrates an embodiment of an acoustic liner 36 suitable for use in the above described compartment 2. The acoustic liner 36 comprises various layers which are connected by adhesive 38. The acoustic liner 36 comprises a fabric lining 40, a sound barrier layer 42, two layers of Nomex (RTM) fabric 44, a scrim layer 46, and a hook and loop layer 48. This arrangement has been found to be particularly effective at insulating the compartment 2 from sound whilst not adding excessive thickness to the compartment 2. However, other acoustic liners 36 may be provided.

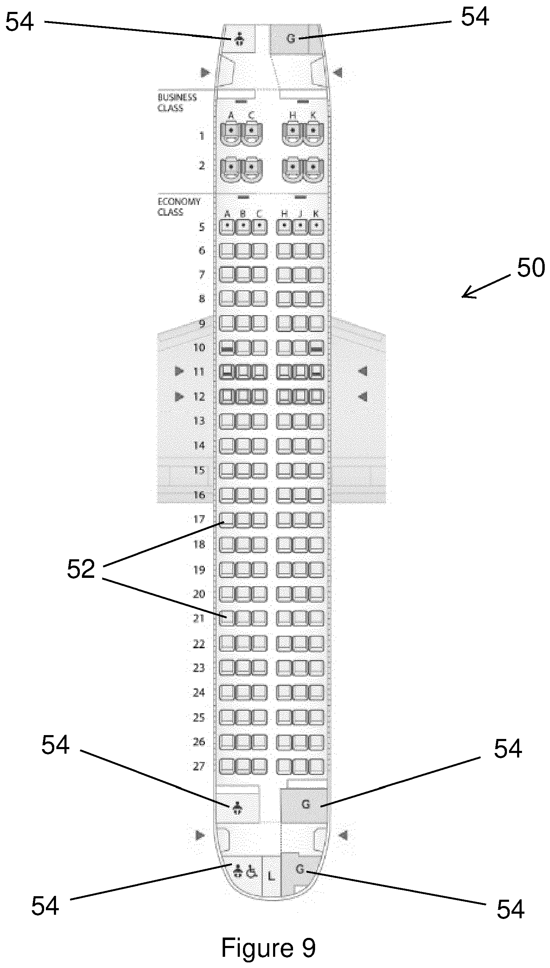

Figure 9 illustrates a schematic cross-sectional top view of an embodiment of an aircraft interior 50. The aircraft interior 50 comprises a plurality of rows of seats 52. The aircraft interior also comprises a plurality of passenger compartments 54. Any of the passenger compartments 54 may be a passenger compartment 2 for a passenger to care for a baby as described above. Figure 9 serves to illustrate that the passenger compartment 2 described above may be included in a conventional aircraft interior layout, because of the compactness of the passenger compartment 2.

Although a compartment has been described above with reference to various embodiments, it will be understood by those skilled in the art that various changes in form and detail may be made without departing from the scope of the invention as set forth in the accompanying claims.

## Claims

1. A passenger compartment (2) for an interior of an aircraft, the passenger compartment (2) adapted for a passenger with a baby, the compartment comprising:
a first side wall (4);
a second side wall (6);
a back wall (10) joining the first side wall (4) to the second side wall (6);
a front wall (8) opposite the back wall (10), the front wall (8) comprising a door (16) to allow the passenger to enter and exit the compartment (2);
a seat (18), wherein at least a portion of the seat (18) is pivotally attached to the first side wall (4); and
a changing table (12) for changing a baby, the changing table (12) pivotally attached to the back wall (10),
wherein a maximum distance between the first side wall (4) and the second side wall (60) is less than 160cm,
**characterised by** further comprising:
a bassinet (24) rigidly attached to a portion of the second side wall (6) adjacent the back wall (10), wherein the bassinet (24) is provided in a space provided between the changing table (12) and the second side wall (6).

2. The passenger compartment of claim 1, further comprising a screen (26) for in-flight entertainment, wherein the screen (26) is attached to the second side wall (6).

3. The passenger compartment of claim 2, wherein the screen (26) is attached to a portion of the second side wall (6) adjacent to the front wall (8).

4. The passenger compartment of any preceding claim, wherein at least one of the first side wall (4), the second side wall (6), the back wall (10) and the front wall (8) comprises an acoustic liner (36) for acoustically insulating the compartment (2).

5. The passenger compartment of claim 4, wherein all of the first side wall (4), the second side wall (6), the back wall (10) and the front wall (8) comprise an acoustic liner (36).

6. The passenger compartment of any preceding claim, wherein the maximum distance between the first side wall (4) and the second side wall (6) is less than 130cm.

7. The passenger compartment of any preceding claim, wherein a maximum distance between the back wall (10) and the front wall (8) is less than 180cm, optionally less than 160cm.

8. The passenger compartment of any preceding claim, wherein the seat (18) is attached to a portion of the first side wall (4) adjacent to the front wall (8).

9. The passenger compartment of any preceding claim, wherein the changing table (12) is attached to a portion of the back wall (10) adjacent the first side wall (4).

10. The passenger compartment of any preceding claim, wherein a space is provided between the seat (18) and the back wall (10), and the changing table (12) extends across the space between the seat (18) and the back wall (10) when in a deployed position.

11. The passenger compartment of any preceding claim, further comprising a module comprising a waste bin (30) and a tissue dispenser (32) provided on the second side wall (6).

12. An aircraft interior layout including one or more rows of passenger seats (52) and the passenger compartment (2) of any preceding claim.

## Patentansprüche

1. Passagierabteil (2) für ein Inneres eines Luftfahrzeugs, wobei das Passagierabteil (2) für einen Passagier mit einem Baby angepasst ist, das Passagierabteil umfassend:
eine erste Seitenwand (4);
eine zweite Seitenwand (6);
eine Rückwand (10), die die erste Seitenwand (4) mit der zweiten Seitenwand (6) verbindet;
eine Vorderwand (8) gegenüber der Rückwand (10), die Vorderwand (8) umfassend eine Tür (16), um es dem Passagier zu ermöglichen, das Abteil (2) zu betreten und zu verlassen;
einen Sitz (18), wobei mindestens ein Abschnitt des Sitzes (18) schwenkbar an der ersten Seitenwand (4) befestigt ist; und
einen Wickeltisch (12) zum Wickeln eines Babys, wobei der Wickeltisch (12) schwenkbar an der Rückwand (10) befestigt ist, wobei ein maximaler Abstand zwischen der ersten Seitenwand (4) und der zweiten Seitenwand (60) weniger als 160 cm beträgt,
**dadurch gekennzeichnet, dass** ferner umfasst ist:
ein Babybett (24), das starr an einem Abschnitt der zweiten Seitenwand (6) benachbart zu der Rückwand (10) befestigt ist, wobei das Babybett (24) in einem zwischen dem Wickeltisch (12) und der zweiten Seitenwand (6) bereitgestellten Raum bereitgestellt ist.

2. Passagierabteil nach Anspruch 1, ferner umfassend einen Bildschirm (26) zur Bordunterhaltung, wobei der Bildschirm (26) an der zweiten Seitenwand (6) befestigt ist.

3. Passagierabteil nach Anspruch 2, wobei der Bildschirm (26) an einem Abschnitt der zweiten Seitenwand (6) benachbart zu der Vorderwand (8) befestigt ist.

4. Passagierabteil nach einem der vorhergehenden Ansprüche, wobei mindestens eine von der ersten Seitenwand (4), der zweiten Seitenwand (6), der Rückwand (10) und der Vorderwand (8) eine Akustikauskleidung (36) zum akustischen Isolieren des Abteils (2) umfasst.

5. Passagierabteil nach Anspruch 4, wobei alle von der ersten Seitenwand (4), der zweiten Seitenwand (6), der Rückwand (10) und der Vorderwand (8) eine Akustikauskleidung (36) umfassen.

6. Passagierabteil nach einem der vorhergehenden Ansprüche, wobei der maximale Abstand zwischen der ersten Seitenwand (4) und der zweiten Seitenwand (6) weniger als 130 cm beträgt.

7. Passagierabteil nach einem der vorhergehenden Ansprüche, wobei ein maximaler Abstand zwischen der Rückwand (10) und der Vorderwand (8) weniger als 180 cm, optional weniger als 160 cm beträgt.

8. Passagierabteil nach einem der vorhergehenden Ansprüche, wobei der Sitz (18) an einem Abschnitt der ersten Seitenwand (4) benachbart zu der Vorderwand (8) befestigt ist.

9. Passagierabteil nach einem der vorhergehenden Ansprüche, wobei der Wickeltisch (12) an einem Abschnitt der Rückwand (10) benachbart zu der ersten Seitenwand (4) befestigt ist.

10. Passagierabteil nach einem der vorhergehenden Ansprüche, wobei zwischen dem Sitz (18) und der Rückwand (10) ein Raum bereitgestellt ist und sich der Wickeltisch (12) in einer ausgeklappten Position über den Raum zwischen dem Sitz (18) und der Rückwand (10) erstreckt.

11. Passagierabteil nach einem der vorhergehenden Ansprüche, ferner umfassend ein an der zweiten Seitenwand (6) bereitgestelltes Modul, das einen Abfallbehälter (30) und einen Tuchspender (32) umfasst.

12. Anordnung für ein Inneres eines Luftfahrzeugs, beinhaltend eine oder mehrere Reihen von Passagiersitzen (52) und das Passagierabteil (2) nach einem der vorhergehenden Ansprüche.

## Revendications

1. Habitacle (2) pour un intérieur d'un aéronef, l'habitacle (2) étant adapté à un passager avec un bébé, le compartiment comprenant :
une première paroi latérale (4) ;
une seconde paroi latérale (6) ;
une paroi arrière (10) reliant la première paroi latérale (4) à la seconde paroi latéral (6) ;
une paroi avant (8) opposée à la paroi arrière (10), la paroi avant (8) comprenant une porte (16) pour permettre au passager d'entrer et de sortir du compartiment (2) ;
un siège (18), dans lequel au moins une partie du siège (18) est fixée de manière pivotante à la première paroi latérale (4) ; et
une table à langer (12) pour changer un bébé, la table à langer (12) étant fixée de manière pivotante à la paroi arrière (10),
dans lequel une distance maximale entre la première paroi latérale (4) et la seconde paroi latérale (60) est inférieure à 160 cm,
**caractérisé en ce qu'**il comprend en outre :
un berceau (24) fixé à demeure à une partie de la seconde paroi latérale (6) adjacente à la paroi arrière (10), dans lequel le berceau (24) est fourni dans un espace fourni entre la table à langer (12) et la seconde paroi latérale (6).

2. Habitacle selon la revendication 1, comprenant en outre un écran (26) pour le divertissement en vol, dans lequel l'écran (26) est fixé à la seconde paroi latérale (6).

3. Habitacle selon la revendication 2, dans lequel l'écran (26) est fixé à une partie de la seconde paroi latérale (6) adjacente à la paroi avant (8).

4. Habitacle selon une quelconque revendication précédente, dans lequel au moins l'une de la première paroi latérale (4), de la seconde paroi latérale (6), de la paroi arrière (10) et de la paroi avant (8) comprend un revêtement acoustique (36) pour isoler acoustiquement l'habitacle (2).

5. Habitacle selon la revendication 4, dans lequel la première paroi latérale (4), la seconde paroi latérale (6), la paroi arrière (10) et la paroi avant (8) comprennent toutes un revêtement acoustique (36).

6. Habitacle selon une quelconque revendication précédente, dans lequel la distance maximale entre la première paroi latérale (4) et la seconde paroi latérale (6) est inférieure à 130 cm.

7. Habitacle selon une quelconque revendication précédente, dans lequel une distance maximale entre la paroi arrière (10) et la paroi avant (8) est inférieure à 180 cm, éventuellement inférieure à 160 cm.

8. Habitacle selon une quelconque revendication précédente, dans lequel le siège (18) est fixé à une partie de la première paroi latérale (4) adjacente à la paroi avant (8).

9. Habitacle selon une quelconque revendication précédente, dans lequel la table à langer (12) est fixée à une partie de la paroi arrière (10) adjacente à la première paroi latérale (4).

10. Habitacle selon une quelconque revendication précédente, dans lequel un espace est fourni entre le siège (18) et la paroi arrière (10), et la table à langer (12) s'étend sur l'espace entre le siège (18) et la paroi arrière (10) lorsqu'elle est dans une position déployée.

11. Habitacle selon une quelconque revendication précédente, comprenant en outre un module comprenant une poubelle (30) et un distributeur de mouchoirs (32) fournis sur la seconde paroi latérale (6).

12. Agencement intérieur d'aéronef comportant une ou plusieurs rangées de sièges passagers (52) et l'habitacle (2) selon une quelconque revendication précédente.
